# EUROPEAN PATENT APPLICATION

(11) **EP 2 677 278 A1**
(43) Date of publication of application: **25.12.2013**
(21) Application number: 12196467.0
(22) Date of filing: 11.12.2012
(51) Int. Cl.: G01C 21/26, G06F 17/30

(54) **Updating system for a navigation apparatus for updating by categories of object and corresponding updating method**

(30) Priority: 18.06.2012 KR 20120064943
(71) Applicant: Hyundai Mnsoft, Inc., Seoul 140-711 (KR)
(72) Inventor: Chang, Jun, 140-711 Seoul (KR)
(74) Representative: Viering, Jentschura & Partner

(57) **Abstract**

A updating system for navigation apparatus updating by category of objects and updating map information of the navigation from a data center, including a version manager configured to manage a version of a data group in which object data is provided in units of a group; and an update manager configured to perform an update in response to an update request and, when the update is completed, transmitting updated version information to the version manager. Further, the navigation includes a controller configured to receive a list of data group versions to update from the data center storing the map information, select a data group version to update from the data group version list, request and receive the selected data group version from the data center, and request an update from the update manager. Further, the update request is received from the controller.

## Description

### Field of the Invention

The present invention relates to a navigation apparatus for updating objects by category and an update method; and more particularly, to a navigation apparatus for updating objects by category and an update method, which is capable of minimizing a data transmission amount.

### Background of the Invention

Generally, a navigation service is provided by a vehicle navigation system including various sensors such as a global positioning system (GPS) sensor, a vehicle speed sensor, and a gyro sensor. When a vehicle driver transmits current position and destination information to a road information provider by using the vehicle navigation system, the road information provider calculates optimal or shortest course induction data from the current position to the destination on the basis of geographic information and real-time traffic information, and transmits the calculated course induction data to the vehicle navigation system.

By providing the shortest or optimal course from a current position to a destination to a vehicle driver, the navigation service may safely lead a driver that is driving a vehicle on a strange road, and enable the driver to prepare for an unpredictable traffic condition. Further, drivers need to update information on a new or changed road for receiving the above-described service.

In map update method, there are an overall update method and a partial update method. Recently, the partial update method is mainly used in consideration of an update time and an update capacity. In a file based map sheet-unit partial update method that is one type of the partial update method, even though only specific data is changed due to correlation with a peripheral map sheet, it is required to update data of a broad map sheet, and a map sheet-unit update needs the update of unchanged objects. For this reason, a data transmission amount increases, and thus, it is difficult to perform an update through a communication service.

As another method, an object-unit update method in which each object has a version compares versions in units of an object, and thus, a map data capacity of a terminal increases and a time taken in updating data increases. Also, when updating information on only a specific area (for example, an area a user has requested), a network of an area adjacent to the requested area can be isolated, and thus, it is required to calculate whether isolation occurs and determine an area, for solving the isolation of a network. For this reason, a corresponding area can be expanded to a whole area.

Moreover, in a method where each object having a version is updated in units of an object and a client requests a version from a data center, when a version is requested, versions of all objects are transmitted to the data center, which analyzes the versions to transmit data having a different version. To this end, a process that extracts corresponding data according to a version of each terminal is needed, and it is required to dynamically generate data for each request. For this reason, overhead occurs because an excessive operation of a sever is required and a client needs to transmit a version of each object in a specific area to the server.

As another method, in a method in which each object having a version is updated in units of an object and a data center performs broadcasting, the data center transmits the newest data and version to a terminal, which receives a version of each object. However, when the terminal needs to receive only the newest version data, the amount of data that the data center needs to broadcast is excessive, and thus, overhead occurs when data is transmitted through a communication network.

### Summary of the Invention

In view of the above, the present invention provides a navigation apparatus for updating objects by category and an update method, which are capable of updating object-unit data by category having a version of a specific time for whole map information.

Further, the present invention provides a navigation apparatus for updating objects by category and an update method, which are capable of decreasing the amount of data broadcasted by an update server through object-unit partial update.

Further, the present invention provides a navigation apparatus for updating objects by category and an update method, which are capable of reducing overhead when transmitting data through a communication network.

In accordance with a first aspect of the present invention, there is provided a navigation apparatus for updating objects by category and updating map information of the navigation from a data center. The navigation includes a version manager configured to manage a version of a data group in which object data is provided in units of a group; an update manager configured to perform an update in response to an update request and, when the update is completed, transmitting updated version information to the version manager; and a controller configured to receive a list of data group versions to update from the data center storing the map information, select a data group version to update from the data group version list, request and receive the selected data group version from the data center, and request an update from the update manager, wherein the update request is received from the controller.

In accordance with a second aspect of the present invention, there is provided a method for updating objects by category and updating map information of a navigation from a data center. The method includes checking, by a version manager, a data group version which is being currently used, and transmitting information on the version to the data center; receiving a list of updatable data groups from the data center; transmitting a selected update request list to update to the data center, the selected update request list being selected by a user; and receiving a data group, corresponding to the transmitted update request list, from the data center to update the data group.

In accordance with the present invention, the navigation apparatus for updating objects by category and an update method in accordance with the present invention perform a partial update in units of an object having a data group version of a specific time for whole map information, and thus can decrease the amount of data transmitted by the update server.

Moreover, the present invention may reduce overhead when transmitting data through the communication network.

### Brief Description of the Drawings

The objects and features of the present invention will become apparent from the following description of embodiments given in conjunction with the accompanying drawings, in which:
Fig. 1 is a diagram illustrating a configuration of an entire system in accordance with an embodiment of the present invention;
Fig. 2 is a block diagram illustrating a navigation shown in Fig. 1;
Fig. 3 is a block diagram illustrating a data center shown in Fig. 1;
Fig. 4 is a flow chart illustrating a method of updating object-unit data groups by category in accordance with the embodiment of the present invention; and
Fig. 5 is a flow chart showing a procedure of an update between the navigation and an object-unit data server in accordance with the present invention.

### Detailed Description of the Embodiments

Terms or words used in the specification and claims should not be limited and construed as common or dictionary meanings, and should be construed as meanings and concepts according to the technical spirit of the present invention based on the principle that the inventor can appropriately define the concept of each term for describing the invention in the best way.

Therefore, embodiments described in the specification and configurations illustrated in the drawings are merely embodiments of the present invention and do not represent the technical spirit and scope of the present invention, and thus, it needs to be understood that the present invention covers all the modifications, equivalents, and replacements within the idea and technical scope of the present invention.

Hereinafter, embodiments of the present invention will be described in detail with reference to the accompanying drawings which form a part hereof.

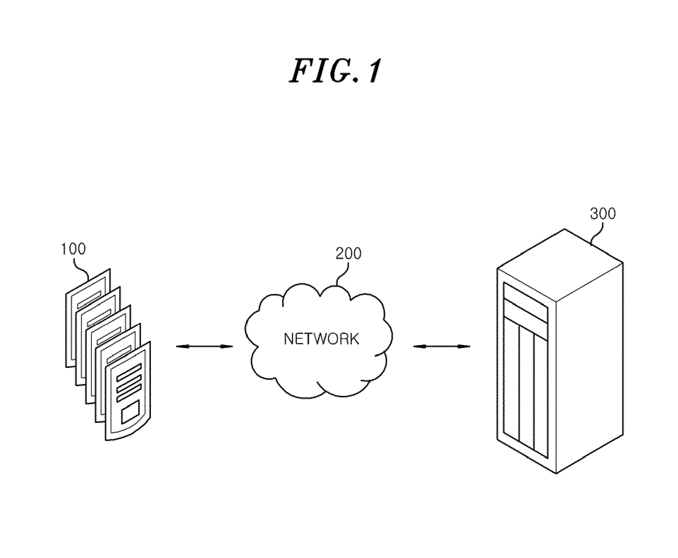

Fig. 1 is a diagram illustrating a configuration of an entire system in accordance with an embodiment of the present invention. As illustrated in Fig. 1, the system may include a navigation apparatus 100 that receives and updates object-unit data information and displays the updated data information to a user, a network 200 that transmits/receives data, and a data center 300 that transmits a data group (selected by the user) to update.

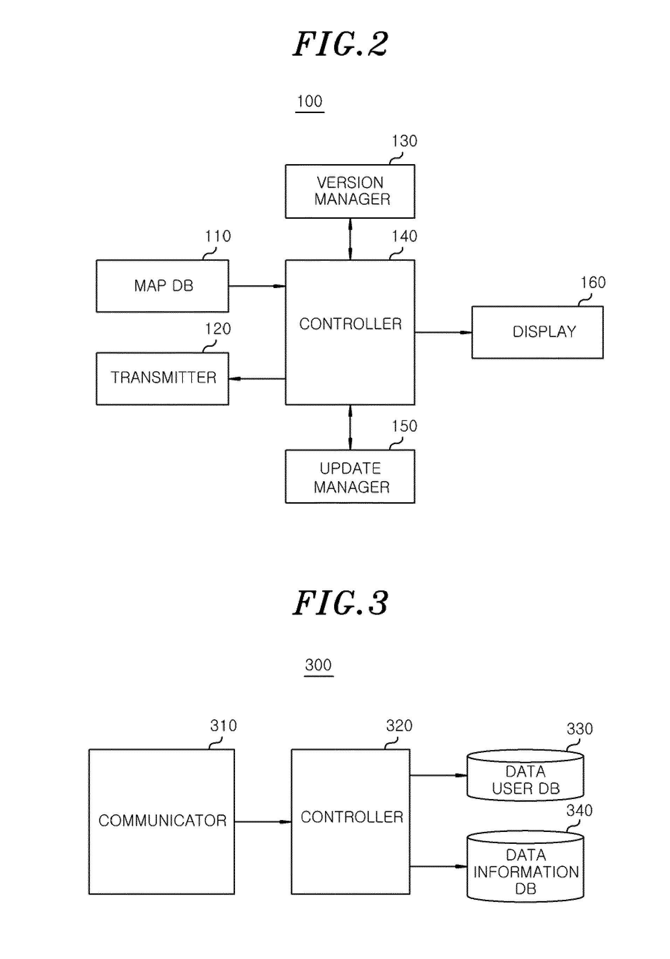

Fig. 2 is a block diagram illustrating a navigation apparatus 100 shown in Fig. 1. As illustrated in Fig. 2, the navigation apparatus 100 includes; a version manager 130 that manages a version of each data group in which object data is provided in units of a group; a receiver 110 that receives a list of newest updatable data groups transferred by the data center 300, transfers the list of newest updatable data groups to a controller 140, receives a data group having a corresponding version transferred by the data center 300, and transfers the received data group to the controller 140; a transmitter 120 that transmits a data group version, transferred from the controller 140, to the data center 300 and transmits a data group corresponding to a data group version requested by the controller 140 to request the data group from the data center 300; an update manager 150 that loads the data group to update and updates data; a display 160 that outputs update map information to a user; and a controller 140 that requests a data group version from the version manager 130, and requests a data update from the update manager 150 by controlling the receiver 110 and the transmitter 120. Here, the object data includes a plurality of data group.

Fig. 3 is a block diagram illustrating the data center 300 shown in Fig. 1. As illustrated in Fig. 3, the data center 300 may include a communicator 310 that receives data group information transmitted from the navigation apparatus 100 and transmits data group information to update, an object-unit data version database (DB) 330 that stores a object-unit data version, an object-unit data information DB 340 that stores object-unit data information, and a controller 320 that controls the data center 300.

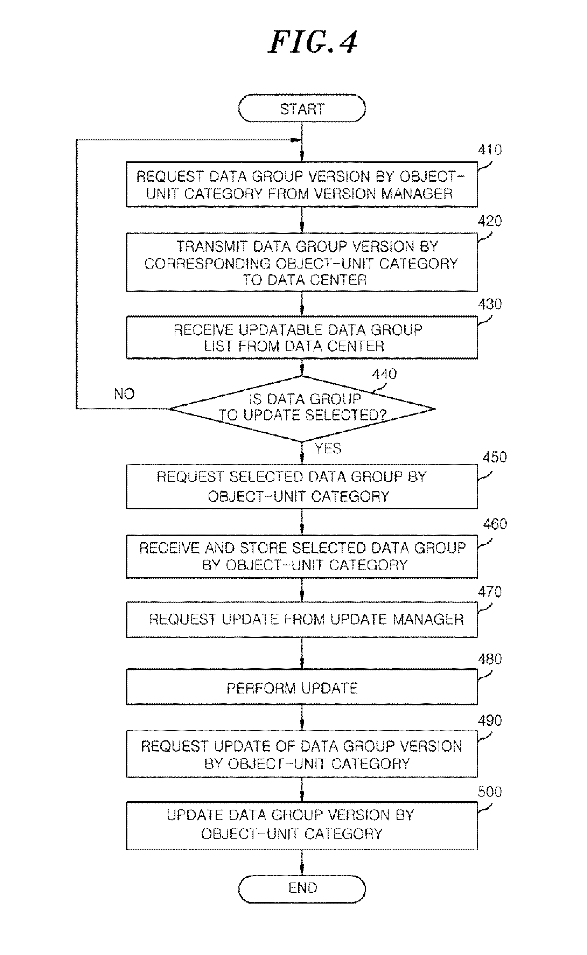

Fig. 4 is a flow chart illustrating a method of updating object-unit data groups by category in accordance with the embodiment of the present invention.

Referring to Fig. 4, data group versions are managed in units of a group associated with each data. The controller 140 requests data group versions by object-unit category from the version manager 130 in operation 410, and the version manager 130 transmits data group versions by object-unit category of a corresponding group to the data center 300 in operation 420.

The data center 300 receives data group versions by category which are being currently used in the navigation apparatus 100, and receives an update request list of updatable data groups by category from the object-unit data version DB 330 and transmits the update request list to the navigation apparatus 100. Here, the data group has a data group version by category which is one or more of a network, a background, and a search.

In addition, the data group may be classified into five categories: a network, a background, a symbol, search and the others.

The network may have an association between networks for a route search and guidance along a route and may include attribution information on, for example, roads, lanes, road-ranks (expressway, street, etc.), traffic lights, links, nodes, left- and right-turns, crossways and the like, which is displayed in a map on a display of a navigation apparatus when the route is searched.

The background may be information on buildings, apartment complexes, facilities, and the like, other than the network.

The symbol may be information including texts, characters, logos, icons representative of a region, facilitates, and building, for example, a gas station, hospital, church, convenience store and the like.

The search may be information including POI (Point of Interest) data, theme data, e.g., famous restaurants, famous tourist resorts, addresses, phone numbers and the like.

Finally, the others may be information including an administrative district, a speed indicator, a traffic light, a surveillance camera and the like.

The navigation apparatus 100 receives the update request list of updatable data groups from the data center 300 in operation 430, and determines whether a data group version to update from among the update request list is selected in operation 440.

If it is determined that the a data group version to update is selected in operation 440, the controller 140 requests the selected data group version by object-unit category from the data center 300 in operation 450. On the other hand, if it is determined that the data group version to update is not selected in operation 440, a control step goes back in operation 410.

The data center 300 transmits the requested data group version among data group versions stored in the object-unit data information DB 340 to the controller 140, and the controller 140 receives and stores the selected data group version by object-unit category in operation 460. The controller 140 requests an update from the update manager 150 in operation 470, and the update manager 150 performs an update in operation 480. When the update is completed, the controller 140 requests the update of data group versions by category from the version manager 130 in operation 490, and the version manager 130 updates the data group versions by object-unit category in operation 500.

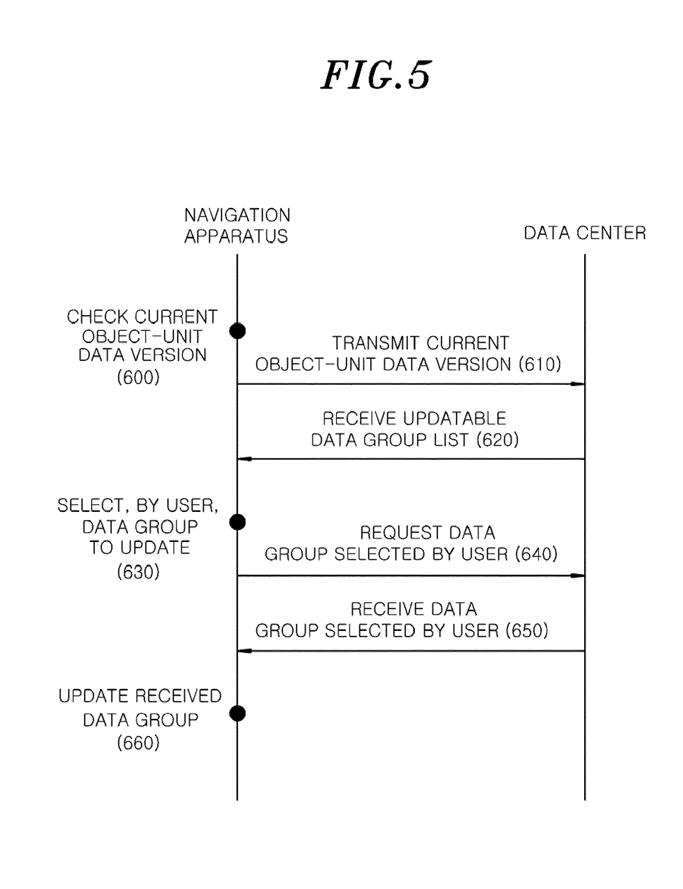

Fig. 5 is a flow chart showing a procedure of an update between the navigation and the data center shown in Fig. 1.

Referring to Fig. 5, the navigation apparatus 100 checks object-unit data group versions which are being currently used in operation 600, transmits the checked object-unit data group versions to the data center 300 in operation 610, and receives a list of updatable data groups from the data center 300 in operation 620. A user selects a data group to update from the received data group list in operation 630, and requests the selected data group from the data center 300 in operation 640. The navigation apparatus 100 receives the data group, selected by the user, from the data center 300 in operation 650, and updates the received data group in operation 660.

While the invention has been shown and described with respect to the embodiments, the present invention is not limited thereto. It will be understood by those skilled in the art that various changes and modifications may be made without departing from the scope of the invention as defined in the following claims.

## Claims

1. A navigation apparatus for updating objects by category and updating map information of the navigation from a data center, the navigation comprising:
a version manager configured to manage a version of a data group in which object data is provided in units of a group;
an update manager configured to perform an update in response to an update request and, when the update is completed, transmitting updated version information to the version manager; and
a controller configured to receive a list of data group versions to update from the data center storing the map information, select a data group version to update from the data group version list, request and receive the selected data group version from the data center, and request an update from the update manager,
wherein the update request is received from the controller.

2. The navigation apparatus of claim 1, further comprising:
a receiver for receiving a list of updatable data groups transmitted by the data center to transfer the updatable data group list to the controller, and receiving a selected data group to update from the data center to transfer the received data group to the controller, the selected data group being selected by a user;
a transmitter for transmitting a data group version of the navigation, which is received from the controller and is being currently used, to the data center and requesting the selected data group to update from the data center; and
a display for outputting the updatable data group list received from the data center, and outputting updated map information to the user.

3. The navigation apparatus of claim 1, wherein:
the version manager divides and manages objects by category which are one or more of a network, a background, and a search; and
when the controller requests the data group version, the version manager transfers the data group version of a corresponding object-unit category to the controller.

4. The navigation apparatus of claim 1, wherein the update manager updates a data group, and then requests update of a data group version from the version manager through the controller.

5. The navigation apparatus of claim 2, wherein the controller requests a data group version of the navigation, which is being currently used, from the version manager and transfers the data group version to the data center through the transmitter.

6. The navigation apparatus of claim 2, wherein the controller receives the updatable data group list from the data center through the receiver, transfers the updatable data group list to the display, and allows the display to output the updatable data group list to the user.

7. The navigation apparatus of claim 1, wherein:
the controller receives a data group to update from the data center;
the update manager performs an update by using the received data group, and then the controller requests update of the data group version from the version manager; and
the update manager updates the data group version of the navigation.

8. The navigation apparatus of claim 1, wherein the data center includes:
a communicator for communicating with the navigation;
an object-unit data version database (DB) for managing a version of an object-unit data group;
an object-unit data information DB for storing map information data; and
a controller for comparing a data group version, received from the navigation, and the data group version of the object-unit data version DB to generate a list of updatable data groups.

9. A method for updating objects by category and updating map information of a navigation apparatus from a data center, the method comprising:
checking, by a version manager, a data group version which is being currently used, and transmitting information on the version to the data center;
receiving a list of updatable data groups from the data center;
transmitting a selected update request list to update to the data center, the selected update request list being selected by a user; and
receiving a data group, corresponding to the transmitted update request list, from the data center to update the data group.

10. The method of claim 9, wherein the data group has a data group version with respect to a specific time for whole map information.

11. The method of claim 9, wherein the data group has a data group version by category which is one or more of a network, a background, and a search.

12. The method of claim 9, wherein said receiving a list of updatable data groups is performed such that the data center compares the received data group version which is being currently used and a version stored in an object-unit data version database included in the data center to generate a list of updatable data group versions, and transmits the generated list to the navigation apparatus.

13. The method of claim 9, wherein said transmitting a selected update request list includes generating one or more data groups, selected from the data group list by the user, as the update request list and transmitting the generated update request list for update to the data center.

14. The method of claim 9, wherein said receiving a data group is performed such that the data center receives the data group to update from an object-unit data information database included in the data center, and transmits the received data group to the navigation apparatus.

15. The method of claim 9, wherein said receiving a data group is performed such that an update manager updates the received data group, and the version manager updates a version.
